# EUROPÄISCHE PATENTANMELDUNG

(11) **EP 0 577 118 A1**
(43) Veröffentlichungstag der Anmeldung: **05.01.1994**
(21) Anmeldenummer: 93110495.4
(22) Anmeldetag: 01.07.1993
(51) Int. Cl.: B01J 8/12, B01J 8/00, B01D 53/08, B65D 90/62

(54) **Schüttgutreaktor, mit im unteren Reaktorbereich angeordneten dachförmigen Schüttgutverteilerböden und steuerbareren Abzugsvorrichtungen**

(30) Priorität: 02.07.1992 DE 4221737; 17.11.1992 DE 4238717
(71) Anmelder: Bergwerksverband GmbH, D-45307 Essen (DE)
(72) Erfinder: Pass, Reinhard, D-45134 Essen (DE); Weber, Raymond, D-58453 Witten (DE)

(57) **Zusammenfassung**

Schüttgutreaktor mit im unteren Reaktorbereich angeordneten dachförmigen Schüttgutverteilerböden und steuerbaren Abzugsvorrichtungen, wobei a) die dachförmigen Schüttgutverteilerböden (6, 7; 9, 10) auf zwei waagerechten Ebenen (I, II) ortsfest angeordnet sind, b) die dachförmigen Schüttgutverteilerböden (6; 9) der Ebene (I) "auf Lücke" zu den dachförmigen Schüttgutverteilerböden (7, 10) der Ebene (II) angeordnet sind, c) den dachförmigen Schüttgutverteilerböden (6, 7; 9, 10) senkrecht verschiebbare Schüttgutabsperrahmen (8; 11) zugeordnet sind und d) die senkrecht verschiebbaren Schüttgutabsperrahmen (8; 11) an Betätigungselemente (14) angeschlossen sind.

## Beschreibung

Die Erfindung betrifft einen Schüttgutreaktor mit im unteren Reaktorbereich angeordneten dachförmigen Schüttgutverteilerböden und steuerbaren Abzugsvorrichtungen, wie sie z. B. aus der DE 39 16 325 A1 bekannt sind. Bei diesen Schüttgutreaktoren ist es nachteilig, daß die steuerbaren Abzugsvorrichtungen aus waagerecht angeordneten Tellern oder Platten gebildet werden die unterhalb von offenen Austragsrohren im Abstand angeordnet sind und die in der waagerechten Ebene vibrierbar, drehbar oder verschwenkbar sind. Die Teller oder Platten haben beim Drehen oder Schwenken einen erheblichen Platzbedarf. Weiterhin werden die Teller oder Platten durch die Schüttgutmassen belastet und dadurch deren Beweglichkeit behindert. Wegen der Größe der Teller oder Platten lassen sich, bezogen auf die Anströmfläche, nur wenige Abzugsöffnungen in der Abzugsebene anordnen, so daß der für eine optimale Ausnutzung des Schüttgutes wichtige planparallele Abzug nicht überall gewährleistet ist. Außerdem ist ein bevorzugtes Abziehen bestimmter senkrechter Schichten des Schüttgutes nicht oder nur unzulänglich möglich.

Der Erfindung liegt, ausgehend von einem Schüttgutreaktor der eingangs genannten Gattung, die Aufgabe zugrunde, die vorgenannten Nachteile des bekannten Schüttgutreaktors zu vermeiden.

Diese Aufgabe wird durch die kennzeichnenden Merkmale des Patentanspruchs 1 gelöst. Weiterbildungen dieses Schüttgutreaktors sind in den Unteransprüchen 2 bis 6 niedergelegt.

Bei dem erfindungsgemäßen Schüttgutreaktor wird durch die Aufteilung der ortsfesten dachförmigen Schüttgutverteilerböden auf zwei waagerechte Ebenen und durch deren Anordnung "auf Lücke" in Verbindung mit den über Betätigungselemente senkrecht sowohl nach oben als auch nach unten verschiebbaren Schüttgutabsperrahmen sichergestellt, daß die Beweglichkeit der Letzteren nicht durch die Auflast des Schüttgutes beeinträchtigt wird. Außerdem ist ein vollständiges Verschließen der Austragsöffnungen in Hochstellung möglich, während in Niedrigstellung das Schüttgut völlig frei fließen kann. Dadurch, daß in der Abzugsebene vergleichsweise viele Abzugsöffnungen angeordnet werden können, ist der häufig gewünschte planparallele Abzug über den gesamten Querschnitt des Schüttgutreaktors optimal gewährleistet. Daneben sind aber auch, da die Schüttgutabsperrahmen einzeln oder gruppenweise verschiebbar eingerichtet werden können, bestimmte Schichten des Schüttgutes bevorzugt oder allein aus dem Schüttgutreaktor abziehbar.

Mit dem erfindungsgemäßen Schüttgutreaktor ist eine kompakte Bauweise verwirklicht, obwohl er eine Vielzahl von Abzugsvorrichtungen aufweist, um sowohl den planparallelen als auch den schichtweisen Abzug zu ermöglichen. Die senkrechte Verschiebung des Schüttgutabsperrahmens erfordert nur geringe Bewegungskräfte, da fast das gesamte Schüttgut den starr eingebauten, dachförmigen Schüttgutverteilerböden aufliegt. Der Abzug des Schüttgutes kann sowohl kontinuierlich als auch chargenweise erfolgen. Die Abzugsgeschwindigkeit ist leicht über die einstellbare Abzugsöffnungsweite regelbar. Der Schüttgutreaktor läßt sich andererseits im Bedarfsfall auch sehr schnell und zudem vollständig entleeren.

Der erfindungsgemäße Schüttgutreaktor kann auch als Schüttgutbehälter, als Wanderschichtadsorber, als Schüttguttrockner oder als Schüttschichtfilter verwendet werden.

Die Erfindung wird nachfolgend anhand der Zeichnung beispielhaft näher erläutert. Es zeigen:
- Figur 1: einen Schüttgutreaktor mit Gegenstromgasaufgabe in die Schüttung,
- Figur 2: einen Schüttgutreaktor mit Gegenstromgasaufgabe unterhalb der Schüttung,
- Figur 3: einen mit Gas querdurchströmten Schüttgutreaktor,
- Figur 4: einen beheizbaren Schüttgutreaktor ohne Gaszuführung von außen, mit eingezeichneten Betätigungselementen,
- Figur 4a: den Gegenstand der Figur 4 in einer um 90° gedrehten Schnittebene,
- Figur 4b: Einzelheit "X" aus Fig. 4a in Schließstellung,
- Figur 4c: Einzelheit "X" in der Schnittebene von Figur 4 gemäß D .-. D,
- Figur 4d: Einzelheit "X" gemäß Figur 4b in Fließstellung,
- Figur 4e: Einzelheit "X" gemäß Figur 4c in der Schnittebene von Figur 4,
- Figur 4f: Einzelheit "X" in der Schnittebene B .-. B von Figur 4b,
- Figur 4g: Einzelheit "X" in der Schnittebene C .-. C von Figur 4b,
- Figur 5: Einzelheit "X" gemäß Figur 4a in Schließstellung, und
- Figur 5a: Einzelheit "X" gemäß Figur 4a in Fließstellung.

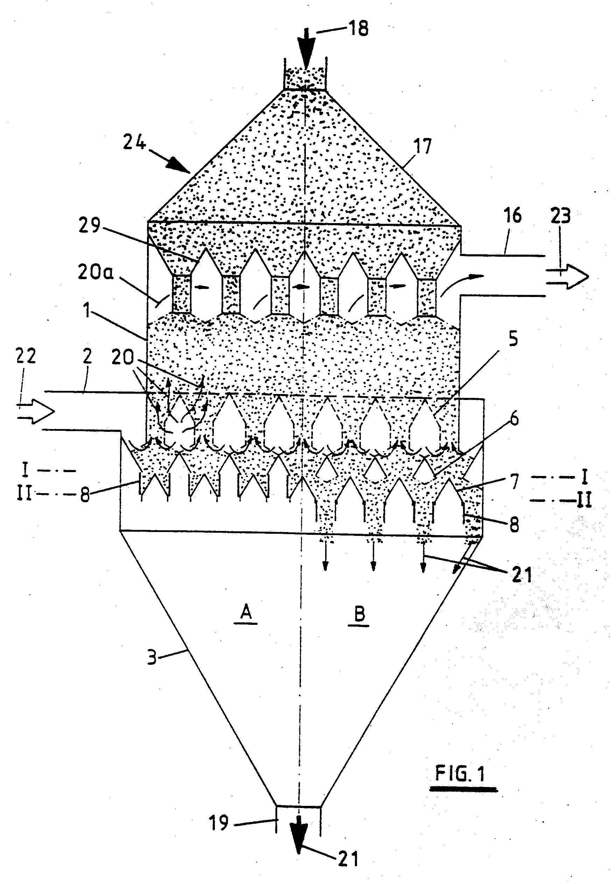

In Figur 1 ist ein erfindungsgemäßer Schüttgutreaktor 24 abgebildet, der aus einem Behälter 1 besteht, dem ein Einlauftrichter 17 für das Schüttgut vorgeschaltet und ein Auslauftrichter 3 nachgeschaltet ist. Das Schüttgut wird über einen Schüttguteinlauf 18 dem Schüttgutreaktor 24 aufgegeben und verläßt diesen über einen Schüttgutauslauf 19, wie Schüttgutströmungspfeile 21 verdeutlichen.

Bei dem Schüttgutreaktor 24 handelt es sich um einen gasdurchströmten Reaktor mit seitlichem Gaseintritt 2 im unteren Teil des Behälters 1 und mit seitlichem Gasaustritt 16 im oberen Bereich des Behälters 1. Der Strömungsverlauf des Gases ist durch den Gasströmungspfeil 22 im Gaseintritt 2 und den Gasströmungspfeil 23 im Gasaustritt 16 verdeutlicht.

Der Schüttgutreaktor 24 arbeitet nach dem Gegenstromprinzip, bei dem das Gas aus dem Gaseintritt 2 dachförmigen gasdurchlässigen Schüttgutverteilerböden 5 zugeführt wird. Aus diesen kann das Gas, wie die Gasströmungspfeile 20 zeigen, gleichmäßig verteilt in das Schüttgut eintreten, das seinerseits den Schüttgutreaktor 24 von oben nach unten durchwandert. Das Gas strömt dem Schüttgut entgegen und gelangt zu im oberen Bereich des Schüttgutbehälters 1 im Querschnitt angeordneten dachförmigen gasundurchlässigen Schüttgutverteilerböden 29, die unten offen sind und untereinander sowie mit dem Gasaustritt 16 verbunden sind. Die Gasführung in diesem Bereich ist durch die Gaströmungspfeile 20a gekennzeichnet.

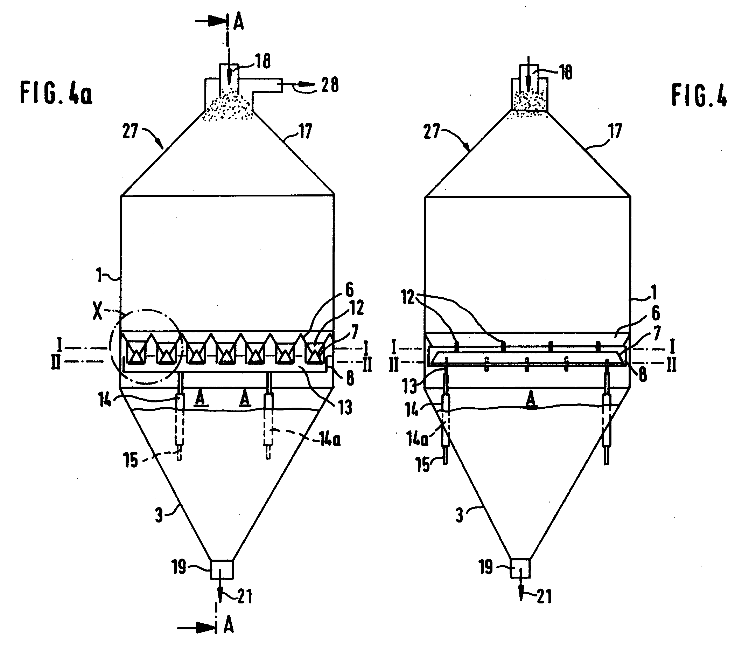

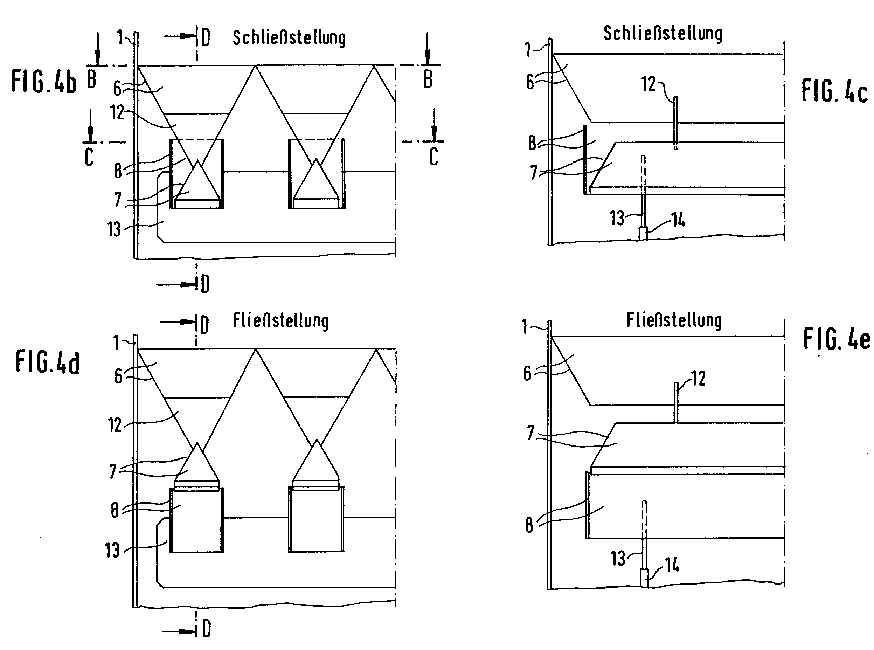

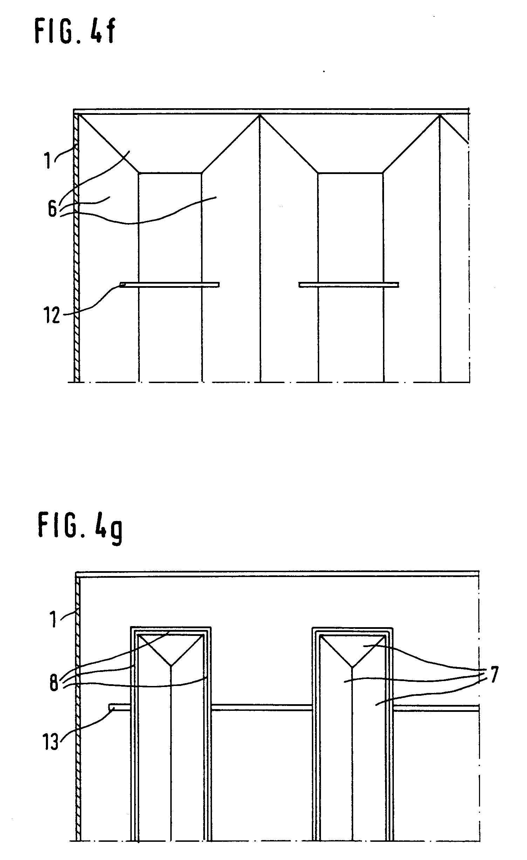

Im unteren Bereich des Behälters 1 und unterhalb der dachförmigen gasdurchlässigen Schüttgutverteilerböden 5 sind dachförmige gasundurchlässige Schüttgutverteilerböden 6 und 7 jeweils auf einer waagerechten Ebene I...I bzw. II...II ortsfest angeordnet. Die dachförmigen gasundurchlässigen Schüttgutverteilerböden 6 der Ebene I...I sind dabei "auf Lücke" zu den dachförmigen gasundurchlässigen Schüttgutverteilerböden 7 der Ebene II...II angebracht. Den dachförmigen gasundurchlässigen Schüttgutverteilerböden 6, 7 sind senkrecht verschiebbare gasundurchlässige Schüttgutabsperrahmen 8 zugeordnet, deren Verschiebbarkeit über Betätigungselemente 14 bewirkt wird. (Vergleiche hierzu auch die Figuren 4, 4a bis 4g.)

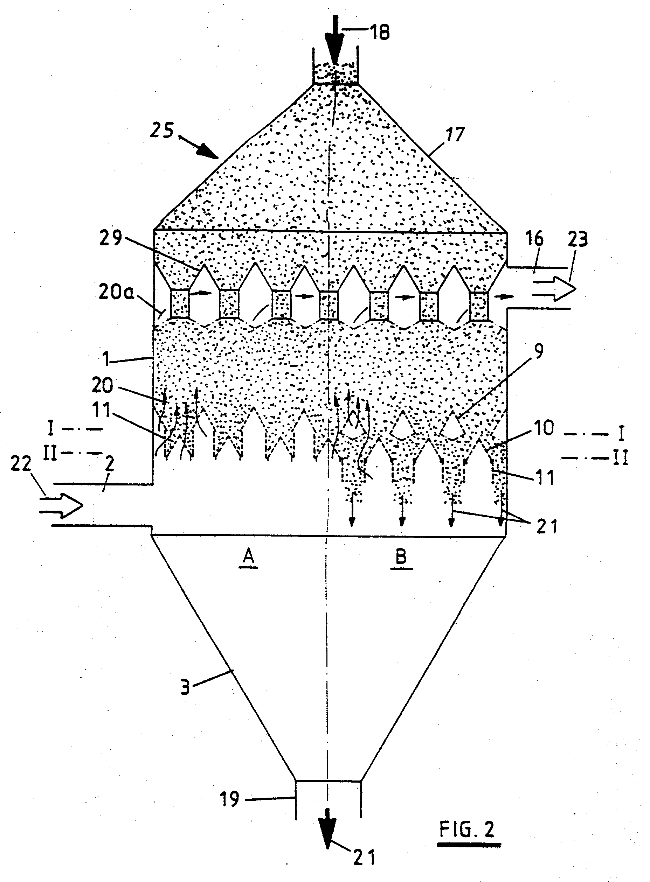

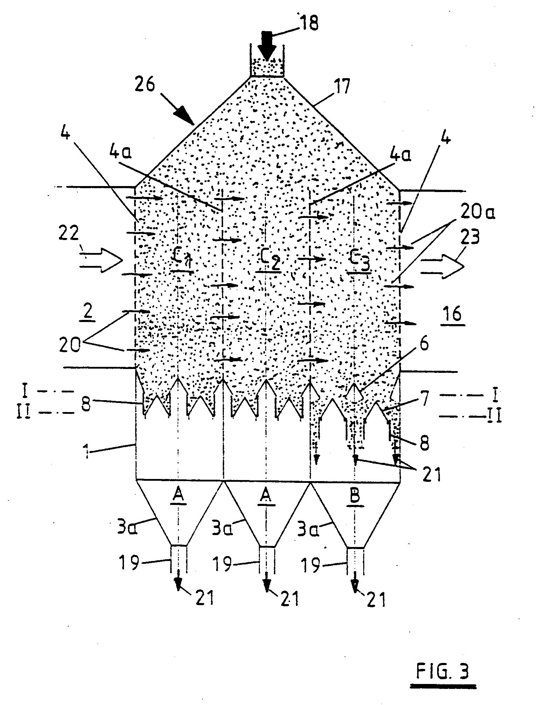

In Figur 1 ist auf der linken Hälfte der Querschnittsdarstellung die Schließstellung A und in der rechten Hälfte die Fließstellung B der gasundurchlässigen Schüttgutabsperrahmen 8 für das Schüttgut schematisch dargestellt. Der Übersichtlichkeit halber sind in Figur 1 (wie auch in den Figuren 2 und 3) die Betätigungselemente 14 der gasundurchlässigen Schüttgutabsperrahmen 8 weggelassen, die später anhand der Figuren 4 und 4a sowie 4b bis 4g näher erläutert werden.

In der Fließstellung B kann das Schüttgut frei zwischen den dachförmigen gasundurchlässigen Schüttgutverteilerböden 6 und 7 hindurchfließen. In der Schließstellung A ist der gesamte Zwischenraum zwischen den dachförmigen gasundurchlässigen Schüttgutverteilerböden 6 und 7 vollständig verschlossen. Bei Bedarf können natürlich zur Regelung der Fließgeschwindigkeit des Schüttgutes auch beliebige Zwischenpositionen der gasundurchlässigen Schüttgutabsperrahmen 8 zwischen der niedrigsten (vollständig geöffnet) und der höchsten Position (vollständig geschlossen) eingestellt werden.

Durch die erfindungsgemäße Anordnung der dachförmigen gasundurchlässigen Schüttgutverteilerböden 6 und 7 in Verbindung mit den senkrecht verschiebbaren gasundurchlässigen Schüttgutabsperrahmen 8 läßt sich eine sehr kompakte Bauweise dieser steuerbaren Abzugsvorrichtung ermöglichen, wobei die Vielzahl der Einzelelemente einen optimalen planparallelen Abzug des Schüttgutes sicherstellt. Andererseits lassen sich auch einzelne sehr schmale senkrechte Schichten des Schüttgutes beim Abziehen unterschiedlich steuern. Da das Schüttgut auf den starr eingebauten dachförmigen Schüttgutverteilerböden 6 und 7 auflastet, sind die mit den Betätigungselementen 14 aufzuwendenden Kräfte für das senkrechte Verschieben der gasundurchlässigen Schüttgutabsperrahmen 8 vergleichsweise niedrig.

In Figur 2 ist eine andere Ausgestaltung eines erfindungsgemäßen Schüttgutreaktors 25 abgebildet, der ebenfalls einen Gegenströmer hinsichtlich der Gasführung wiedergibt. Allerdings erfolgt hier die Gasaufgabe vollständig unterhalb der Schüttung. Gesonderte dachförmige gasdurchlässige Schüttgutverteilerböden 5, wie beim Beispiel der Figur 1, sind hier entbehrlich. Deren Aufgabe wird vielmehr durch gasdurchlässige dachförmige Schüttgutverteilerböden 9 und 10 wahrgenommen, die außerdem zugleich die Absperrfunktion der gasundurchlässigen Schüttgutverteilerböden 6 und 7 gemäß Figur 1 wahrnehmen. Dadurch wird die Bauweise des Schüttgutreaktors 25 noch kompakter gestaltet und die Anzahl der Einbauten beträchtlich verringert. Bei der Ausgestaltung gemäß Figur 2 sind außerdem auch gasdurchlässige Schüttgutabsperrahmen 11 vorgesehen, wodurch die Gasdurchströmungsflächen vergrößert werden. Die Funktionsweise für den Schüttgutabzug ist beim Schüttgutreaktor 25 die gleiche wie beim Schüttgutreaktor 24 (Figur 1).

Ein weiteres Ausführungsbeispiel der Erfindung ist, wie Figur 3 zeigt, im Schüttgutreaktor 26 realisiert, bei dem im Abzugsbereich ähnlich wie beim Beispiel des Reaktors 24 (Figur 1) dachförmige gasundurchlässige Schüttgutverteilerböden 6 und 7 und gasundurchlässige Schüttgutabsperrahmen 8 Verwendung finden. Abweichend ist beim Schüttgutreaktor 26 die Gasführung, denn der Schüttgutreaktor 26 wird querdurchströmt. Dazu ist der Schüttgutbehälter 1 in seinem mittleren und oberen Bereich mit gasdurchlässigen Wänden 4 ausgerüstet und Gaseintritt 2 und Gasaustritt 16 liegen einander gegenüber. Im Beispiel der Figur 3 ist der Schüttgutreaktor 26 außerdem noch durch gasdurchlässige Zwischenwände 4a in einzelne Schüttgutbereiche C1, C2 und C3 unterteilt, denen jeweils ein eigener Auslauftrichter 3a zugeordnet ist. Eine solche Bauweise empfiehlt sich insbesondere dann, wenn die Schüttgutbereiche C1, C2 und C3 unterschiedlich kontaminiert werden und mit unterschiedlicher Geschwindigkeit abgezogen werden sollen oder diese für eine unterschiedliche Weiterverwendung vorgesehen sind.

Die konstruktive Ausgestaltung und die Funktionsweise des Abzugsbereiches für das Schüttgut sind wie bei den Schüttgutreaktoren 24 (Figur 1) oder 25 (Figur 2) gehalten.

Ein weiteres Ausführungsbeispiel der Erfindung ist in einem Schüttgutreaktor 27 verwirklicht, bei dem, wie aus Figur 4 und 4a hervorgeht, keine Fremdgasbeschickung vorgesehen ist. Beim Schüttgutreaktor 27 handelt es sich um einen Regenerationsreaktor, bei dem das Schüttgut durch Aufheizen von Kontaminationen befreit wird, die über einen Abgasaustritt 28 aus dem Reaktor 27 abgezogen werden. Auch beim Reaktor 27 ist die Ausgestaltung des Schüttgutabzugsbereiches und dessen Funktionsweise vergleichbar mit denen der Reaktoren 24 (Figur 1), 25 (Figur 2) und 26 (Figur 3).

In den Figuren 4 und 4a sowie in den Figuren 4b bis 4g, in denen die Einzelheit "X" aus Figur 4b in einem Ausführungsbeispiel erläutert ist, sind ortsfeste Verbindungslaschen 12 dargestellt, die die Schüttgutverteilerböden 6 mit den Schüttgutverteilerböden 7 verbinden und innerhalb des Schüttgutbehälters 1 festlegen. An die Stelle der Schüttgutverteilerböden 6 und 7 können gemäß Schüttgutreaktor 25 (Figur 2) auch die Schüttgutverteilerböden 9 und 10 miteinander verbunden werden. Außerdem ist eine verschiebbare Verbindungslasche 13 vorgesehen, die den Schüttgutabsperrahmen 8 (Figur 1, 3 und 4) bzw. 11 (Figur 2) mit den zuvor bereits erwähnten Betätigungselementen 14 verbindet. Die Betätigungselemente 14 sind über Durchführungen 14a aus dem Auslauftrichter 3 herausgeführt und mit Halterungen 15 verbunden.

Durch Auf- und Abwärtsbetätigen der Betätigungselemente 14 werden zugleich die Schüttgutabsperrahmen 8 bzw. 11 aus ihrer Schließstellung (Figur 4b und Figur 4c) in eine Fließstellung (Figur 4d und Figur 4e gebracht. Dabei sind die Betätigungselemente 14 so gestaltet, daß auch Zwischenstellungen möglich sind.

Wenn, wie im Beispiel der Figur 3, die einzelnen Schüttgutbereiche C1, C2 und C3 einzeln oder gruppenweise abziehbar gestaltet werden sollen, muß selbstverständlich die verschiebbare Verbindungslasche 13 geteilt ausgebildet werden und jeder Teillasche 13 jeweils ein unabhängiges Betätigungselement 14 zugeordnet sein.

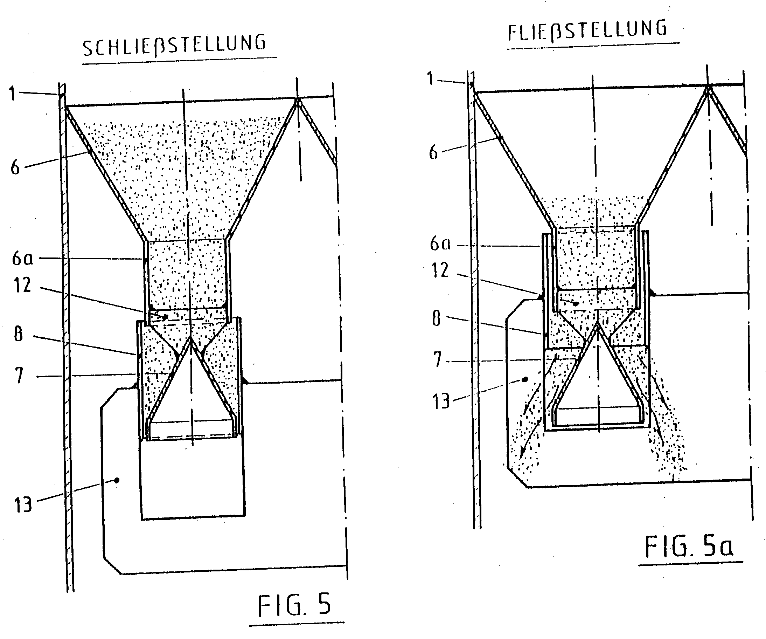

Bei dem Ausführungsbeispiel gemäß den Figuren 5 und 5a erfolgt das Abziehen des Schüttgutes, wenn der Schüttgutabsperrahmen 8 nach oben bewegt wird. In diesem Fall wird das Schüttgut zwischen dem Schüttgutabsperrahmen 8 und dem Schüttgutverteilerboden 7 hindurchfließen (Figur 5a). An dem Schüttgutverteilerboden 6 sind Schüttgutführungen 6a angeordnet.

Das Ausführungsbeispiel gemäß den Figuren 5 und 5a hat den Vorteil, daß das vollständige Entleeren des Reaktors in jeder geöffneten Position des Schüttgutabsperrahmens 8 erfolgen kann.

Dagegen kann bei den vorher beschriebenen Ausführungsbeispielen das vollständige Entleeren des Reaktors nur dann erfolgen, wenn man den Schüttgutabsperrahmen 8 vollständig nach unten bewegt (Figur 4d). Ist der Schüttgutabsperrahmen 8 in einer Position zwischen der Schließstellung (Figur 4b) und der Fließstellung gemäß Figur 4d, wird ein Teil des Schüttgutes zwischen dem Schüttgutabsperrahmen 8 und dem Schüttgutverteilerboden 7 nicht abgezogen.

Die Vorrichtung gemäß den Figuren 5 und 5a kann auch mit gasdurchlässigen Schüttgutverteilerböden und Schüttgutabsperrahmen ausgebildet sein.

### Bezugszeichenliste

- 1: Schüttgutbehälter
- 2: Gaseintritt
- 3: Auslauftrichter
- 3a: Auslauftrichter
- 4: gasdurchlässige Wand
- 4a: gasdurchlässige Zwischenwand
- 5: gasdurchlässiger Schüttgutverteilerboden
- 6: gasundurchlässiger Schüttgutverteilerboden
- 6a: gasundurchlässige Schüttgutführungen
- 7: gasundurchlässiger Schüttgutverteilerboden
- 8: gasundurchlässiger Schüttgutabsperrahmen
- 9: gasdurchlässiger Schüttgutverteilerboden
- 10: gasdurchlässiger Schüttgutverteilerboden
- 11: gasdurchlässiger Schüttgutabsperrahmen
- 12: Verbindungslasche
- 13: verschiebbare Verbindungslasche
- 14: Betätigungselement
- 14a: Durchführung
- 15: Halterung
- 16: Gasaustritt
- 17: Einlauftrichter
- 18: Schüttguteinlauf
- 19: Schüttgutauslauf
- 20: Gaströmungspfeil
- 20a: Gaströmungspfeil
- 21: Schüttgutströmungspfeil
- 22: Gasströmungspfeil
- 23: Gasströmungspfeil
- 24: Schüttgutreaktor
- 25: Schüttgutreaktor
- 26: Schüttgutreaktor
- 27: Schüttgutreaktor
- 28: Abgasaustritt
- 29: gasundurchlässiger Schüttgutverteilerboden
- A: Schließstellung
- B: Fließstellung
- C1: Abzugsbereich
- C2: Abzugsbereich
- C3: Abzugsbereich
- I...I: Ebene
- II...II: Ebene

## Patentansprüche

1. Schüttgutreaktor mit im unteren Reaktorbereich angeordneten dachförmigen Schüttgutverteilerböden und steuerbaren Abzugsvorrichtungen, **dadurch gekennzeichnet**, daß
a) die dachförmigen Schüttgutverteilerböden (6, 7; 9, 10) auf zwei waagerechten Ebenen (I, II) ortsfest angeordnet sind,
b) die dachförmigen Schüttgutverteilerböden (6; 9) der Ebene (I) "auf Lücke" zu den dachförmigen Schüttgutverteiler-böden (7, 10) der Ebene (II) angeordnet sind,
c) den dachförmigen Schüttgutverteilerböden (6, 7; 9, 10) senkrecht verschiebbare Schüttgutabsperrahmen (8; 11) zugeordnet sind und
d) die senkrecht verschiebbaren Schüttgutabsperrahmen (8; 11) an Betätigungselemente (14) angeschlossen sind.

2. Schüttgutreaktor nach Anspruch 1, **dadurch gekennzeichnet**, daß die Schüttgutabsperrahmen (8; 11) einzeln oder gruppenweise senkrecht verschiebbar sind.

3. Schüttgutreaktor nach Anspruch 1 oder 2, **dadurch gekennzeichne**t, daß die dachförmigen Schüttgutverteilerböden (6, 7) gasundurchlässig ausgebildet sind.

4. Schüttgutreaktor nach Anspruch 1 oder 2, **dadurch gekennzeichnet**, daß die dachförmigen Schüttgutverteilerböden (9, 10) gasdurchlässig ausgebildet sind.

5. Schüttgutreaktor nach einem der Ansprüche 1 bis 4, **dadurch gekennzeichnet**, daß die Schüttgutabsperrahmen (8) gasundurchlässig ausgebildet sind.

6. Schüttgutreaktor nach einem der Ansprüche 1 bis 4, **dadurch gekennzeichnet**, daß die Schüttgutabsperrahmen (11) gasdurchlässig ausgebildet sind.

7. Schüttgutreaktor nach einem der Ansprüche 1 bis 4, **dadurch gekennzeichnet**, daß an den dachförmigen Schüttgutverteilerböden (6) Schüttgutführungen (6a) angeordnet sind.
